# EUROPÄISCHE PATENTSCHRIFT

(11) **EP 0 961 958 B1**
(45) Veröffentlichungstag und Bekanntmachung des Hinweises auf die Patenterteilung: **29.01.2003**
(21) Anmeldenummer: 98910700.8
(22) Anmeldetag: 18.02.1998
(51) Int. Cl.: G05D 23/02, G05D 23/19, G05D 7/01, F28F 27/00, F16K 31/53, G05D 23/275, G05D 23/20, F24D 19/10

(54) **BETÄTIGUNGSVORRICHTUNG FÜR EIN HEIZKÖRPERVENTIL**
ACTUATING DEVICE FOR A RADIATOR VALVE
DISPOSITIF D'ACTIONNEMENT D'UN ROBINET DE RADIATEUR

(30) Priorität: 20.02.1997 DE 19706736
(43) Veröffentlichungstag der Anmeldung: 08.12.1999
(73) Patentinhaber: HONEYWELL AG, 63067 Offenbach am Main (DE)
(72) Erfinder: MÜLLER, Wolfgang, D-71101 Schönaich (DE); KALMBACH, Kurt, F., D-71131 Jettingen (DE); EBERT, Volker, D-70771 Leinfelden (DE); JAUSS, Fritz, D-71101 Schönaich (DE); ULMER, Manfred, D-71101 Schönaich (DE)
(74) Vertreter: Leson, Thomas Johannes Alois, Dipl.-Ing.
(86) Internationale Anmeldenummer: EP9800920
(87) Internationale Veröffentlichungsnummer: WO98037470

(56) Entgegenhaltungen:
- DE-A- 2 926 723
- DE-A- 3 005 316
- DE-A- 3 135 895
- DE-A- 3 401 154
- DE-A- 3 515 590
- DE-A- 3 642 113

## Beschreibung

Die vorliegende Erfindung bezieht sich auf eine Betätigungsvorrichtung für ein Heizkörperventil nach dem Gattungsbegriff des Patentanspruches 1.

Eine derartige Betätigungsvorrichtung ist z.B. aus der DE 36 42 113 A1 bekannt. Bei dieser bekannten Betätigungsvorrichtung ist ein Gehäuse mit Bedien-, Anzeige-, Steuerund Stromversorgungsteil versehen und wird mit einer Ausnehmung über eine motorische Antriebseinrichtung geschoben. Bei abgezogenem Gehäuse kann ein Aufnahmegehäuse fiir einen Motor und ein Getriebe wie ein Handrad in bezug auf ein ortsfestes an dem Heizkörperventil angeflanschtes Antriebsgehäuse verdreht und das Ventil von Hand betätigt werden. Als nachteilig hat sich bei dieser bekannten Vorrichtung herausgestellt, daß zum Handantrieb die beiden Gehäuse nicht nur mechanisch sondern auch elektrisch voneinander getrennt werden müssen und daß wesentliche Elemente, wie Motor und Getriebe, Teil des Handantriebes bilden. In einem Störfall ist aber oft gerade der Motor Ursache der Störung und liegt somit für eine Reparatur nicht als separates Teil bzw. zusammen mit den anderen entfembaren Teilen vor.

Weitere gattungsgemäße Vorrichtungen können der DE 34 01 154 A1 und der DE 35 15 590 A1 entnommen werden.

Ferner zeigt die DE-A-29 26 723 eine Heizkörperventilsteuerung, bei der ein zeitgesteuerter Motor über eine Mitnehmergabel und ein Gummiband auf das Handrad eines Heizkörperventils arbeitet. Über eine Teleskopstange zwischen Motor und Heizkörper wird das Motorgehäuse stationär gehalten.

Hiervon ausgehend ist es die Aufgabe der vorliegenden Erfindung, eine Betätigungsvorrichtung der gattungsgemäßen Art so auszugestalten, daß das Oberteil und das das Handrad aufweisende Unterteil Bestandteil der Betätigungsvorrichtung sind und zugleich ein Handantrieb ermöglicht wird, ohne daß hierbei funktionswesentliche Teile der Betätigungsvorrichtung beteiligt sind.

Die Lösung dieser Aufgabe gelingt gemäß den kennzeichnenden Merkmalen des Patentanspruches 1. Weitere vorteilhafte Ausgestaltungen der erfindungsgemäßen Betätigungsvorrichtung sind den abhängigen Ansprüchen entnehmbar.

Anhand der Figuren der beiliegenden Zeichnungen sei im folgenden ein Ausführungsbeispiel der Erfindung näher beschrieben. Es zeigen:
- Fig. 1: eine erste Seitenansicht der Betätigungsvorrichtung;
- Fig. 2: eine zweite Seitenansicht der Betätigungsvorrichtung;
- Fig. 3: eine Seitenansicht gemäß Fig. 2 mit getrenntem Ober- und Unterteil;
- Fig. 4: einen Axialschnitt durch die Vorrichtung gemäß Fig. 2;
- Fig. 5: einen Axialschnitt durch die Vorrichtung gemäß Fig. 3;
- Fig. 6: eine Fig. 4 entsprechende Schnittansicht mit entferntem Drehgriff; und
- Fig. 7: das Unterteil in einer Seitenansicht und einer Draufsicht.

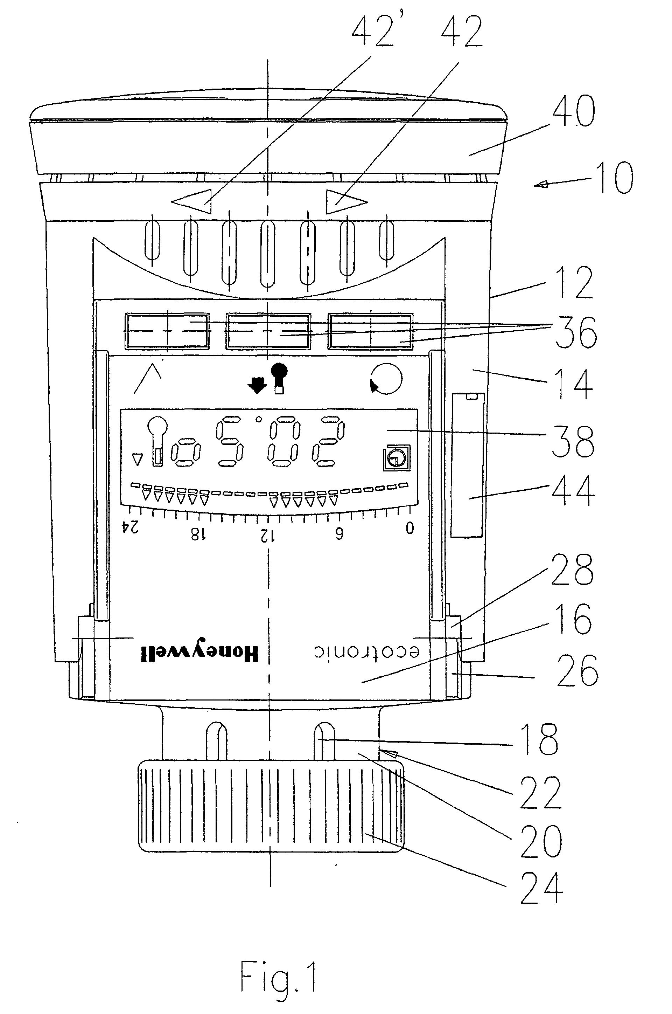

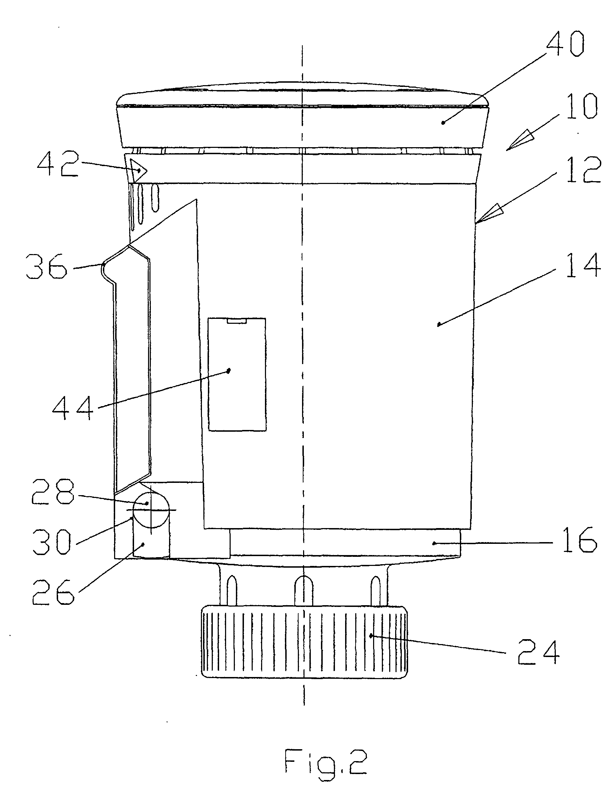

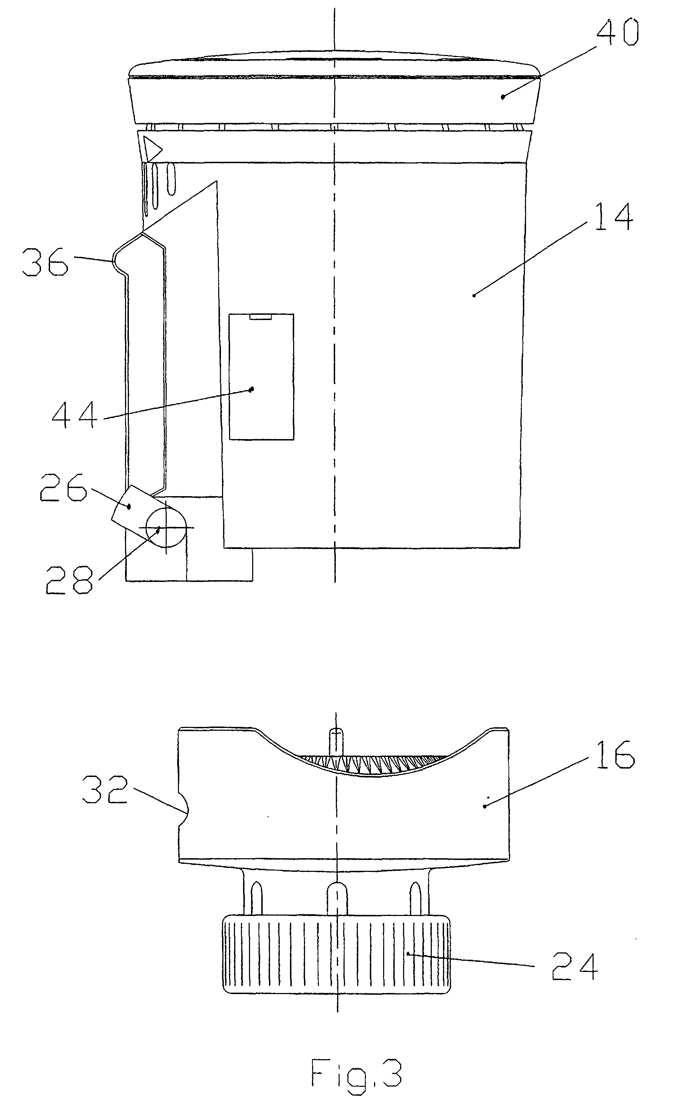

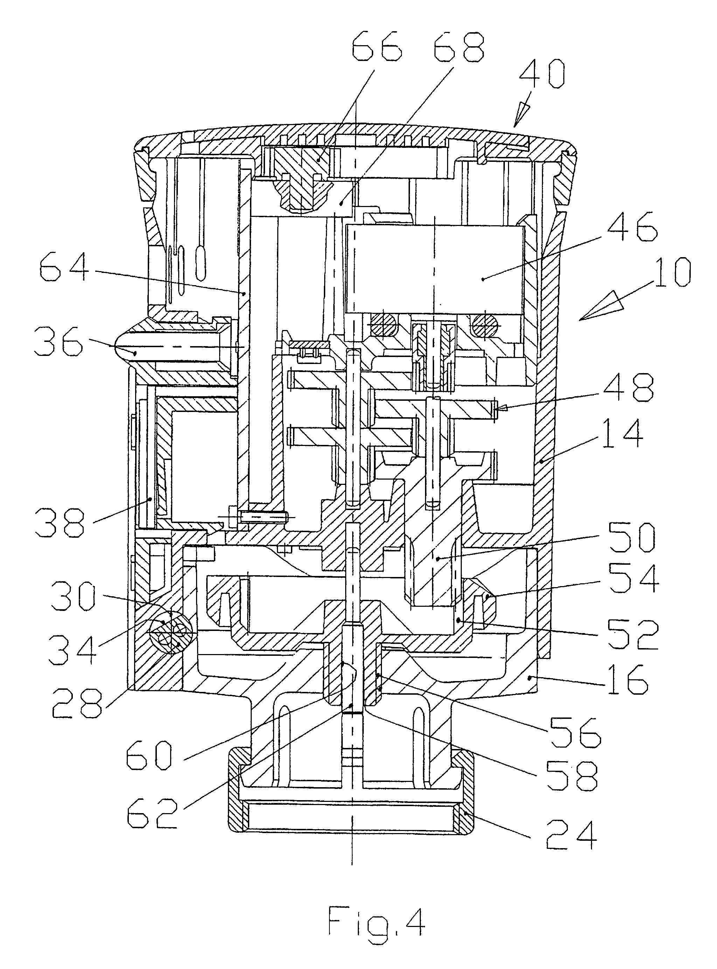

Gemäß den Figuren 1 bis 3 umfaßt eine Betätigungsvorrichtung 10 fiir ein nichtdargestelltes Heizkörperventil ein Gehäuse 12, bestehend aus einem Oberteil 14 und einem Unterteil 16. Beide Teile 14, 16 sind im Querschnitt kreisförmig, wobei das Oberteil das Unterteil schürzenartig übergreift. Das Unterteil 16 ist im wesentlichen topfförmig ausgestaltet und weist einen durch Einschnitte 18 in Stege 20 unterteilten radial elastischen Fuß 22 auf, über den eine Überwurfmutter 24 geschoben ist, mit der das Unterteil 16 mit dem nicht-dargestellten Heizkörperventil befestigt wird. Ein mit einem Hebel 26 versehener zylindrischer Stift 28 greift in eine tangential gerichtete Ausnehmung 30 in dem Oberteil 14 und eine Kerbe 32 in der Außenwand des Unterteiles 16 und verriegelt beide Teile. Eine in den Figuren 4 bis 6 erkennbare Abflachung 34 an dem zylindrischen Stift 28 gestattet das Lösen beider Teile 14, 16 voneinander, wenn der Stift 28 durch Angriff an dem Hebel 26 um 120° gedreht wird.

Das Oberteil 14 weist Bedienelemente in Form einer Tastatur 36 sowie eine LCD-Anzeige 38 auf. Mit der Tastatur 36 kann z.B. ein Wochenprogramm, d.h. eine Temperaturabsenkung bzw. Anhebung zu bestimmten Zeitpunkten und an bestimmten Tagen der Woche vorgegeben werden. Die Anzeige 38 dient der Bedienerführung und der Modusauswahl durch Menü sowie der Anzeige des eingestellten Tagesprogrammes.

Ein Drehgriff 40 bildet zugleich den Deckel des Gehäuse-Oberteiles 14 und dient der Eingabe von Temperatursollwerten in einer Weise analog zu einem herkömmlichen Thermostatventil, wobei Pfeile 42, 42' in den Farben rot und blau die Richtung angeben, in der der Temperatur-Sollwert erhöht bzw. erniedrigt werden kann.

Ein Steckeranschluß 44 ist seitlich an dem Oberteil 14 vorgesehen und dient dem wahlweisen Anschluß eines Fernfühlers oder eines Netzteiles bzw. dient als Kommunikationsschnittstelle.

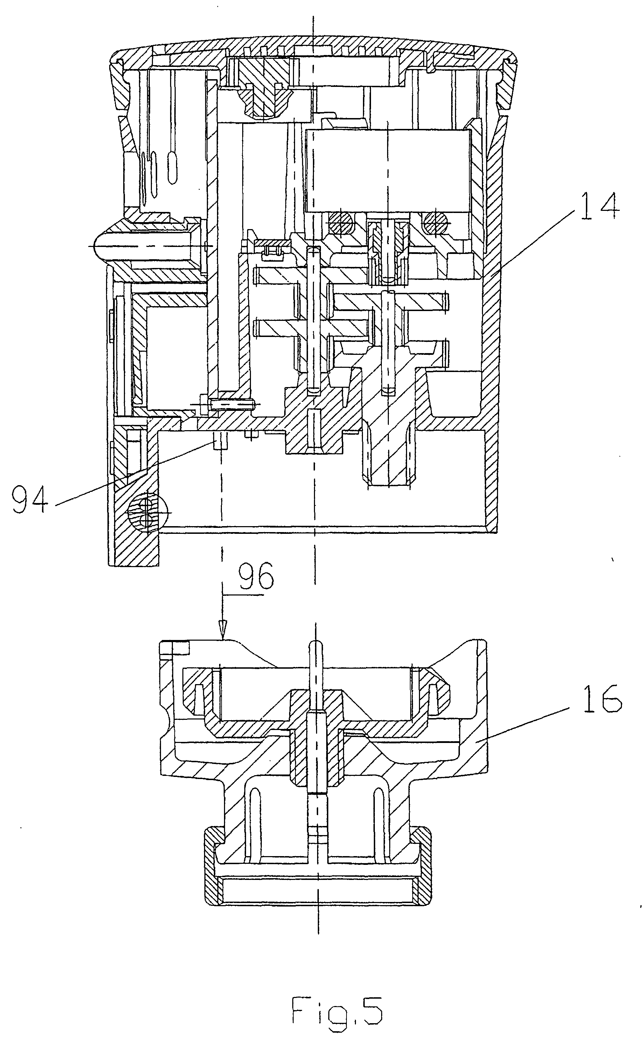

Gemäß den Figuren 4 - 6 ist die Betätigungsvorrichtung 10 in einem Axialschnitt dargestellt. Das Oberteil 14 und das Unterteil 16 bestehen jeweils aus Kunststoff und sind im wesentlichen topfförmig ausgestaltet, wobei das Oberteil 14 das Unterteil 16 schürzenartig übergreift und beide Teile durch den Stift 28 verriegelt sind. Nur bei Drehung des Stiftes 28 aus der in Fig. 4 gezeigten Lage um 120° in die in Fig. 5 gezeigte Lage werden beide Teile entriegelt und können getrennt werden.

In dem Oberteil 14 ist ein Gleichstrommotor 46 angeordnet, der mit seiner Welle eine Getriebekette 48 antreibt. Ein Zahnritzel 50 am Ausgang der Getriebekette 48 greift in eine Innenverzahnung 52 eines tellerförmigen Handrades 54, welches seinerseits mit einem zentralen Gewindezapfen 56 in ein Gewindeloch 58 im Boden des topfförmigen Unterteiles 16 eingreift, so daß eine Drehung des Handrades 54 eine axiale Verstellung desselben bewirkt. In dem Handrad 54 ist ferner eine zentrale abgesetzte Bohrung 60 angeordnet, in die ein Anschlagstift 62 eingesetzt ist, der mit dem Stößel des nicht-dargestellten Ventils zusammenwirkt.

Der Motor 46 wird von einer Elektronik angesteuert, die einen Mikroprozessor umfaßt und auf einer Schaltungsplatine 64 angeordnet ist. Diese Elektronik steht mit der Tastatur 36 als Eingabeelement und dem LCD-Display 38 als Ausgabeelement elektrisch in Verbindung. Ein weiteres Eingabeelement wird durch den Drehgriff 40 vorgegeben, der mit einem Zahnritzel 66 zusammenwirkt, dessen Welle einen Bitgenerator 68 als Analog/Digital-Wandler antreibt. Der Bitgenerator 68 ist seinerseits wiederum elektrisch an die Elektronik angeschlossen.

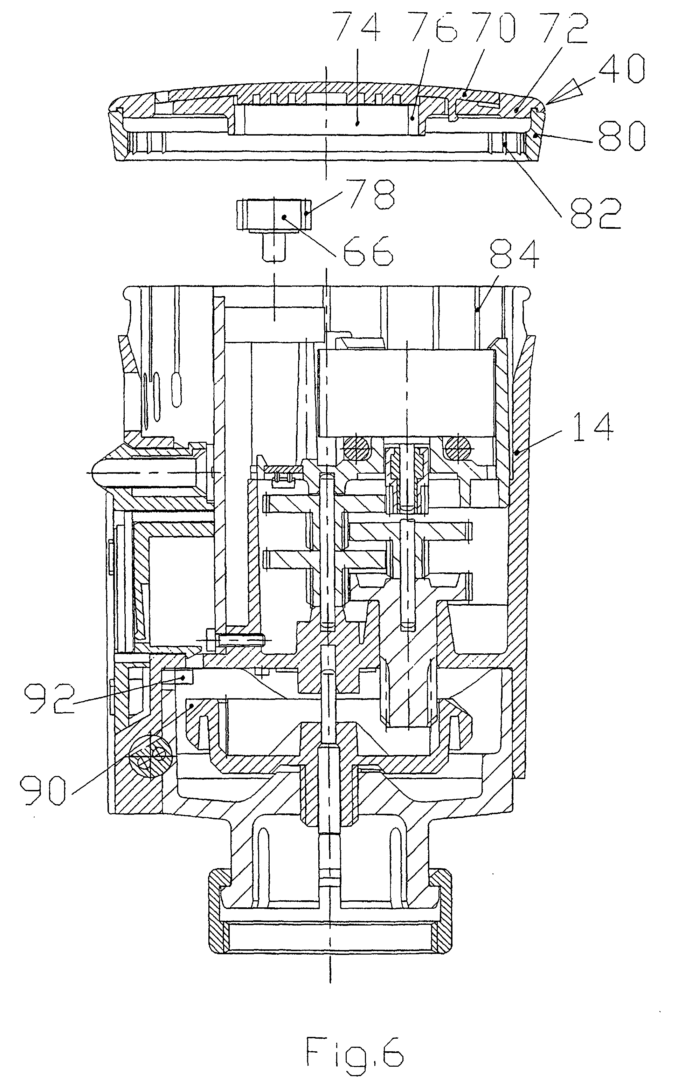

Wie am besten aus Fig. 6 erkennbar, besteht der Drehgriff 40 aus drei Elementen, die alle aus Kunststoff geformt und miteinander verrastet sind. Ein Deckel 70 ist mit einem Gehäuseteil 72 verrastet, der eine zentrale Ausnehmung 74 mit Innenverzahnung 76 aufweist. In diese Innenverzahnung 76 greift eine Außenverzahnung 78 des Zahnritzels 66. Mit dem Gehäuseteil 72 ist ein konzentrischer Wangenteil 80 verrastet, der auf seinem Innenumfang achsparallele Nasen 82 aufweist, mit denen er in entsprechende achsparallele Kerben 84 im oberen Rand des Gehäuse-Oberteiles 14 eingreift, wenn der Drehgriff 40 mit dem Oberteil 14 verrastet ist.

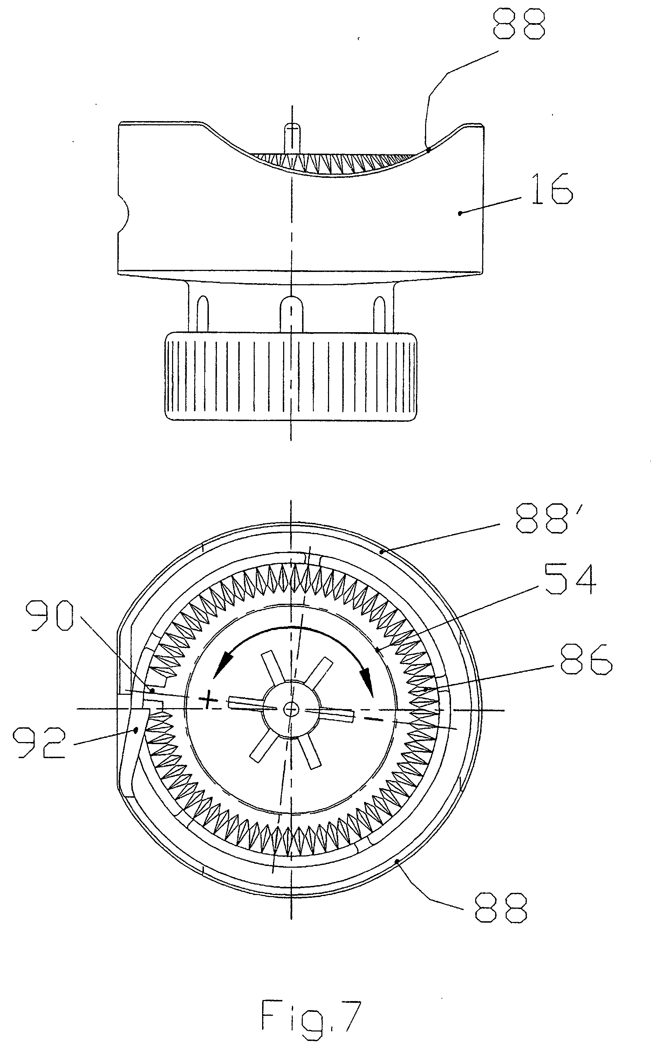

Gemäß Fig. 7 weist das Handrad 54 am Außenumfang eine Rändelung 86 auf, um die Griffigkeit zu verbessern. Ferner ist an dem topfförmigen Unterteil 16 in der Außenwand auf gegenüberliegenden Seiten jeweils ein Ausschnitt 88, 88' angebracht, der die Zugänglichkeit des Handrades 54 verbessert. Das Handrad 54 besitzt ferner am Außenumfang eine radial abstehende Anschlagnase 90, die mit einem ortsfesten radial einfedernden Anschlag 92 an dem topfförmigen Unterteil 16 in Eingriff gelangt, wenn das Handrad 54 entsprechend weit zurückgedreht ist (Fig. 5). Hierdurch wird das Handrad 54 gegen unbeabsichtigtes Herausdrehen gesichert. Nur durch Zurückdrücken des federnden Anschlages 92 radial nach außen kann das Handrad 54 aus dem Unterteil 14 durch weiteres Herausschrauben entfernt werden. Bei der normalen Stellbewegung wird die Drehung des Handrades 54 durch den Anschlag 92 nicht behindert (Fig. 6).

Anstelle der Antriebsverbindung über das Zahnritzel 50 am Ausgang der Getriebekette 48 und die Innenverzahnung an dem tellerförmigen Handrad 54 kann auch eine andere Antriebsverbindung gewählt werden, die z.B. aus einem Ritzel in Gestalt eines Vielkants und einer entsprechenden zentralen Gegenausnehmung im Handrad besteht. Hierbei müssen natürlich Ritzel und Gegenausnehmung miteinander fluchten, was dem Fachmann auf der Hand liegt und daher nicht dargestellt ist.

Ferner kann das Oberteil 14 und das Unterteil 16 mit miteinander fluchtenden achsparallelen Schlitzen versehen sein, um eine optische Hubanzeige vorzugeben, was aber ebenfalls nicht dargestellt ist.

Schließlich ist gemäß Fig. 5 ein auf einen nicht dargestellten Schalter einwirkender Schalterstößel 94 angeordnet, der sich im verbundenen Zustand beider Teile 14, 16 auf der Topfwand des Unterteils 16 abstützt und nur im eingeschobenen Zustand die Ansteuerung des im Oberteil 14 angeordneten Motors gestattet.

## Patentansprüche

1. Betätigungsvorrichtung für ein Ventil, insbesondere für ein Heizkörperventil, mit einem Gehäuse, bestehend aus einem Oberteil und einem Unterteil, wobei das Unterteil des Gehäuses mit Hilfe eines Befestigungsmittels, insbesondere mit Hilfe einer Überwurfmutter, mit dem Ventil befestigbar ist und wobei das Oberteil und das Unterteil des Gehäuses lösbar miteinander verbunden sind und im verbundenen Zustand formschlüssig ineinander greifen, **dadurch gekennzeichnet, daß**
a) das Oberteil (14) alle funktionswesentlichen aktiven Teile, nämlich ein Bedienteil (36), ein Anzeigeteil (38), ein Steuerteil (64, 68), ein Antriebsteil (46, 48) und ein Stromversorgungsteil aufweist;
b) das Unterteil (16) ein in demselben verstellbares Handrad (54) aufweist;
c) das Handrad (54) zur axialen Verstellung eines Ventilstößels dient; und
d) das Handrad (54) bei miteinander verbundenem Oberteil (14) und Unterteil (16) als Koppelelement eines in dem Oberteil (14) angeordneten Getriebes (48) ausgebildet ist.

2. Betätigungsvorrichtung nach Anspruch 1, **dadurch gekennzeichnet, daß** das Oberteil (14) im mit dem Unterteil (16) verbundenen Zustand mit einem Zahnritzel (50) des Getriebes (48) in eine Innenverzahnung (52) des Handrades (54) eingreift.

3. Betätigungsvorrichtung nach Anspruch 2, **dadurch gekennzeichnet, daß** das Handrad (54) an seinem Außenumfang mit einer Rändelung (86) versehen ist.

4. Betätigungsvorrichtung nach Anspruch 2, **dadurch gekennzeichnet, daß** das Handrad (54) mit einer radial gerichteten Anschlagnase (90) versehen ist, die mit einem radial nach innen einfedemden Anschlag (92) an dem Unterteil (16) zusammenwirkt.

5. Betätigungsvorrichtung nach Anspruch 3 oder 4, **dadurch gekennzeichnet, daß** das Handrad (54) mit einem zentralen Gewindezapfen (56) in einem Gewindeloch (58) im Boden des Unterteiles (16) axial verstellbar ist.

6. Betätigungsvorrichtung nach Anspruch 5, **dadurch gekennzeichnet, daß** in einer zentralen abgesetzten Bohrung (60) in dem Handrad (54) ein mit dem Ventilstößel zusammenwirkender Anschlagstift (62) angeordnet ist.

7. Betätigungsvorrichtung nach Anspruch 5, **dadurch gekennzeichnet, daß** die Außenwand des Unterteiles (16) mit Ausschnitten (88,88') versehen ist, um das Handrad (54) für eine Handbetätigung besser zugänglich zu machen.

8. Betätigungsvorrichtung nach Anspruch 5, **dadurch gekennzeichnet, daß** das Oberteil (14) im zusammengebauten Zustand das Unterteil (16) schürzenartig übergreift und daß ein tangential eingesetzter drehbarer Verriegelungsstift (28) beide Teile miteinander verbindet bzw. in einer gedrehten Stellung mit einer abgeflachten Kontur (34) freigibt.

9. Betätigungsvorrichtung nach Anspruch 8, **dadurch gekennzeichnet, daß** das Oberteil (14) mit einer Ausnehmung (30) versehen ist, in die der Verriegelungsstift (28) eingreift und die zu einer in dem Unterteil (16) angeordneten Kerbe (32) offen ist.

10. , Betätigungsvorrichtung nach einem der Ansprüche 1 bis 9, **dadurch gekennzeichnet, daß** das Ober- und Unterteil (14,16) mit miteinander fluchtenden achsparallelen Schlitzen in der Außenwand versehen sind, um eine optische Hubanzeige vorzugeben.

11. Betätigungsvorrichtung nach Anspruch 8, **dadurch gekennzeichnet, daß** ein auf einen Schalter im Oberteil (14) einwirkender Stößel (94) angeordnet ist, der sich im zusammengebauten Zustand auf dem Unterteil (16) abstützt und den Schalter betätigt.

## Claims

1. Actuating device for a valve, in particular for a radiator valve, with a casing consisting of an upper part and a lower part, the lower part of the casing being attachable to the valve by means of a fastener, in particular a coupling ring, and the upper part and the lower part of the casing being releasably connected to each other and positively engaging one in the other in the connected condition, **characterized in that**
a) the upper part (14) comprises all working parts essential to the function of the device, namely an operating part (36), a display part (38), a control part (64, 68), a drive part (46, 48) and a power supply part;
b) the lower part (16) has a hand wheel (54) displaceable within it;
c) the hand wheel (54) is used for axial adjustment of a valve push rod; and
d) the hand wheel (54) is configured as a coupling element of a gear (48) in the upper part (14) when the upper part (14) and lower part (16) are connected together.

2. Actuating device according to Claim 1, **characterized in that** the upper part (14) when connected to the lower part (16) engages, by a pinion (50) of the gear (48), in internal toothing (52) of the hand wheel (54),

3. Actuating device according to Claim 2, **characterized in that** the hand wheel (54) is provided with knurling (86) on its outer circumference.

4. Actuating device according to Claim 2, **characterized In that** the hand wheel (54) is provided with a radially directed neb (90) which cooperates with a radially inwards springing stop (92) on the lower part (16).

5. Actuating device according to Claim 3 or Claim 4, **characterized in that** the hand wheel (54) is axially displaceable by a central threaded stem (56) in a threaded hole (58) in the bottom of the lower part (16).

6. Actuating device according to Claim 5, **characterized in that** a stop pin (62) cooperating with the valve push rod is arranged in a central stepped bore (60) in the hand wheel (54).

7. Actuating device according to Claim 5, **characterized in that** the outer wall of the lower part (16) is provided with cutouts (88, 88') to make the hand wheel (54) more easily accessible for manual operation.

8. Actuating device according to Claim 5, **characterized in that** the upper part (14) reaches over the lower part (16) in the manner of a skirt in the assembled condition, and **in that** a tangentially inserted rotatable locking pin (28) connects the two parts together and in a rotated position releases them by a flattened contour (34).

9. Actuating device according to Claim 8, **characterized in that** the upper part (14) is provided with a recess (30) into which the locking pin (28) engages and which opens towards a notch (32) in the lower part (16).

10. Actuating device according to any one of Claims 1 to 9, **characterized in that** the upper and lower parts (14, 16) are provided with slits, coaligned and parallel with the axis, in the outer wall, to present a visual indication of the lift.

11. Actuating device according to Claim 8, **characterized In that** a push rod (94) acting on a switch in the upper part (14) is provided which in the assembled condition bears on the tower part (16) and actuates the switch.

## Revendications

1. Dispositif d'actionnement d'un robinet, en particulier d'un robinet de radiateur, comportant un boîtier constitué d'une partie supérieure et d'une partie inférieure, la partie inférieure du boîtier pouvant être fixée au robinet à l'aide d'un moyen de fixation, en particulier à l'aide d'un écrou-raccord, et la partie supérieure et la partie inférieure du boîtier étant reliées entre elles de manière séparable, et s'engageant l'une dans l'autre par complémentarité de forme à l'état relié, **caractérisé en ce que**
a) la partie supérieure (14) comporte tous les éléments actifs essentiels au fonctionnement, à savoir un élément de manoeuvre (36), un élément d'affichage (38), un élément de commande (64, 68), un élément d'entraînement (46, 48) et un élément d'alimentation électrique ;
b) la partie inférieure (16) comporte une roue manuelle (54) déplaçable dans celle-ci ;
c) la roue manuelle (54) sert au réglage axial d'un poussoir du robinet ; et
d) lorsque la partie supérieure (14) et la partie inférieure (16) sont reliées entre elles, la roue manuelle (54) est réalisée en tant qu'élément de couplage d'une transmission (48) disposée dans la partie supérieure (14).

2. Dispositif d'actionnement selon la revendication 1, **caractérisé en ce que** la partie supérieure (14), à l'état relié à la partie inférieure (16), s'engage, par un pignon denté (50) de la transmission (48), dans une denture intérieure (52) de la roue manuelle (54).

3. Dispositif d'actionnement selon la revendication 2, **caractérisé en ce que** la roue manuelle (54) est pourvue d'un moletage (86) sur son pourtour extérieur.

4. Dispositif d'actionnement selon la revendication 2, **caractérisé en ce que** la roue manuelle (54) est pourvue d'un ergot de butée (90), dirigé radialement, qui coopère avec une butée (92), faisant ressort radialement vers l'intérieur, sur la partie inférieure (16).

5. Dispositif d'actionnement selon la revendication 3 ou 4, **caractérisé en ce que** la roue manuelle (54) est déplaçable axialement, par une tige filetée (56) centrale, dans un trou taraudé (58) du fond de la partie inférieure (16).

6. Dispositif d'actionnement selon la revendication 5, **caractérisé en ce que** dans un perçage (60) central étagé de la roue manuelle (54) est disposé un doigt de butée (62) coopérant avec le poussoir du robinet.

7. Dispositif d'actionnement selon la revendication 5, **caractérisé en ce que** la paroi extérieure de la partie inférieure (16) est pourvue de découpes (88, 88') afin de mieux rendre accessible la roue manuelle (54) pour un actionnement manuel.

8. Dispositif d'actionnement selon la revendication 5, **caractérisé en ce qu'**à l'état assemblé, la partie supérieure (14) passe sur la partie inférieure (16) à la manière d'un tablier et **en ce qu'**un doigt de verrouillage (28) tournant, inséré tangentiellement, relie entre elles les deux parties ou les libère dans une position tournée, avec un contour (34) aplati.

9. Dispositif d'actionnement selon la revendication 8, **caractérisé en ce que** la partie supérieure (14) est pourvue d'un évidement (30) dans lequel s'engage le doigt de verrouillage (28) et qui est ouvert vers une encoche (32) disposée dans la partie inférieure (16).

10. Dispositif d'actionnement selon l'une des revendications 1 à 9, **caractérisé en ce que** la partie supérieure (14) et la partie inférieure (16) sont pourvues de fentes aux axes parallèles et sont alignées entre elles, dans la paroi extérieure, afin d'offrir un affichage optique de la course.

11. Dispositif d'actionnement selon la revendication 8, **caractérisé en ce qu'**il est prévu un poussoir (94) qui agit sur un interrupteur dans la partie supérieure (14) et qui prend appui, à l'état assemblé, sur la partie inférieure (16) et actionne l'interrupteur.
